# EUROPÄISCHE PATENTSCHRIFT

(11) **EP 0 770 480 B1**
(45) Veröffentlichungstag und Bekanntmachung des Hinweises auf die Patenterteilung: **19.12.2001**
(21) Anmeldenummer: 96116937.2
(22) Anmeldetag: 22.10.1996
(51) Int. Cl.: B41F 13/12, G06K 15/00

(54) **Digitale Druckmaschine mit Registerregelung**
Printing press with register control system
Presse à imprimer digitale avec contrôle de registre

(30) Priorität: 25.10.1995 DE 29516830 U; 14.08.1996 DE 19632674
(43) Veröffentlichungstag der Anmeldung: 02.05.1997
(73) Patentinhaber: Heidelberger Druckmaschinen Aktiengesellschaft, 69115 Heidelberg (DE)
(72) Erfinder: Rodi, Anton, 69181 Leimen (DE)

(56) Entgegenhaltungen:
- US-A- 5 295 236
- US-A- 5 365 847

## Beschreibung

Die Erfindung betrifft eine Druckmaschine mit einer automatischen Registerregelung für mehrere digitale Bebilderungseinheiten, etwa digitale Druckwerke oder Plattenbelichtungseinheiten, in einer Anzahl, die den für den Bildaufbau benötigten Farbkomponenten entspricht.

Eine solche Druckmaschine verwendet elektronische Bilddaten, die die zu druckenden Bilder darstellen und die außerhalb der Druckmaschine in irgendeinem allgemein gebräuchlichen, maschinenunabhängigen Format erstellt worden sind, einem sogenannten PostScript-Format. Diese Bilddaten werden einer zentralen Steuereinheit der Druckmaschine zugeführt, einem sogenannten Raster-Image-Prozessor, der die Bilddaten für den Druckprozeß aufbereitet, indem er für jede zu druckende Farbe ein digitales Pixelmuster erzeugt, das an die Bebilderungseinheiten angepaßt ist. Jedes Pixelmuster wird über einen Seitenpuffer der jeweiligen Bebilderungseinheit zugeführt, die dann auf einem Substrat pixelweise ein sichtbares Druckbild erzeugt.

Das Substrat kann ein Bedruckstoff wie z.B. Papier sein. Die Bebilderungseinheiten können z.B. Tintenstrahl-Druckwerke sein, deren Farbdüsen pixelweise angesteuert werden, um direkt ein Druckbild auf dem Papier zu erzeugen. Oder die Bebilderungseinheit sind digitale Druckwerke, die nach einem indirekten Verfahren arbeiten, wobei ein Schreibkopf auf einem beweglichen Zwischenträger, etwa einem rotierenden Zylinder, ein latentes Ladungsbild erzeugt, das dem digitalen Pixelmuster entspricht. Das latente Ladungsbild wird durch ein Farbwerk entwickelt, indem entsprechend der Ladungsverteilung Farbe auf den Zwischenträger aufgebracht wird, und die Farbe wird dann auf das Papier übertragen und darauf fixiert.

Alternativ kann das Substrat eine vormontierte Druckform sein, die mit Hilfe von Plattenbelichtungseinheiten direkt entsprechend den digitalen Bildinformationen bebildert wird (Computer-to-Press-Technologie).

Ein entscheidendes Merkmal für die Qualität des Druckerzeugnisses ist die erreichbare Passergenauigkeit. Sie ist ein Maß für die Präzision, mit der die Bebilderungseinheiten die einzelnen Farbauszüge übereinanderlegen.

In der Praxis ist stets nur eine begrenzte Passergenauigkeit zu erreichen. Hauptursache hierfür sind mechanische Toleranzen. Desweiteren wirken sich prozeßbedingte Störeinflüsse aus, zu denen beispielsweise die Feuchtedehnung des Bedruckstoffes zählt.

Infolge dieser Unzulänglichkeiten kommt es zu räumlichen Verschiebungen zwischen den einzelnen Farbauszügen, die sich stets als Kombination der folgenden vier Fehlergrundtypen beschreiben lassen:
- Bei einem Umfangsregisterfehler ist der Farbauszug in der Bewegungsrichtung des Bedruckstoffes verschoben.
- Bei einem Seitenregisterfehler ist der Farbauszug senkrecht zur Bewegungsrichtung des Bedruckstoffes verschoben.
- Bei einem Schrägregisterfehler ist der Farbauszug um einen Winkel zur Bewegungsrichtung des Bedruckstoffes geneigt.
- Bei einer Bilddehnung bzw. -stauchung ist die Länge des Farbauszuges in der Bewegungsrichtung des Bedruckstoffes geändert.

Eine Korrektur von Umfangs-, Seiten- und Schrägristerfehlern erfolgt bei konventionellen Druckmaschinen in aller Regel auf mechanischemWege. Beispielsweise werden Stelleinrichtungen vorgesehen, über die die Plattenzylinder der einzelnen Druckwerke um den jeweiligen Fehlbetrag gegeneinander verdreht bzw. verschoben werden können. Dadurch läßt sich die Passergenauigkeit schrittweise verbessern. Zur Kompensation von Dehungsfehlern kann man zum einen durch Unterlegen der Druckplatte eine Stauchung des Druckbildes erreichen, zum anderen besteht die Möglichkeit, die Druckformen von vornherein entsprechend zu manipulieren.

Alles in allem ist für die mechanische Korrektur von Register- und Dehnungsfehlern eine erheblicher Aufwand erforderlich. Jedes Druckwerk muß mit ensprechenden Verstelleinrichtungen ausgestattet sein. Darüber hinaus ist sehr viel Erfahrung auf Seiten des Druckers bzw. des Maschinenbedieners erfoderlich, um das angestrebte Ziel einer hohen Passergenauigkeit zu erreichen.

Die oben erwähnten digitalen Druckmaschinen unterscheiden sich von konventionellen Druckmaschinen unter anderem darin, daß eine Montage fertig belichteter Druckformen entfällt. Bei Verwendung von digitalen Plattenbelichtungseinheiten werden die Druckformen vor der Belichtung fest auf einem Zylinder montiert, und bei den erwähnten digitalen Druckwerken gibt es anstelle von Druckformen latente Bilder auf einem fest in der Druckmaschine gelagerten Zylinder oder auf einem um den Zylinder umlaufenden Band. Eine Korrektur von Registerfehlern läßt sich in diesem Fall z.B. durch Justierung der Bebilderungseinheiten durchführen.

In der US 53 65 847 ist eine Steuerung für eine solche Druckmaschine beschrieben, bei der in einer zentralen Steuereinheit Referenzbilder erzeugt werden, die die Farbdichteverteilung auf einem Zylinder unmittelbar repräsentieren, und Bebilderungseinheiten für die Zylinder zugeführt werden. Zu den Zylindern gehören Sensoren, die Registerfehler zwischen Bildern erfassen, die aufeinanderfolgenden Zylindern erzeugt werden. Mit Hilfe der von den Sensoren gelieferten Informationen modifiziert die zentrale Steuereinheit die Referenzbilder, um die Registerfehler automatisch zu korrigieren.

Die Art und Weise, wie die Registerfehler im einzelnen korrigiert werden, ist in der genannten Druckschrift nicht beschrieben. In Betracht kommt beispielsweise eine pixelweise Verschiebung der Referenzbilder. Dies würde jedoch sehr viel Rechen- und Speicherkapizität in Anspruch nehmen. Außerdem muß eine entsprechende Korrektureinrichtung an die spezielle Druckmaschine angepaßt sein, da die zu korrigierenden Daten maschinenspezifische Daten sind.

Der Erfindung liegt die Aufgabe zugrunde, eine digitale Druckmaschine mit einer einfachen und universell verwendbaren Korrektureinrichtung für Register- und Dehnungsfehler zwischen den Bebilderungseinheiten zu schaffen.

Diese Aufgabe wird durch die im Anspruch 1 bzw. im Anspruch 7 angegebenen Merkmale gelöst.

Gemäß der Erfindung erfolgt die Korrektur der Registerfehler nicht durch Modifizierung der Bilddaten für die Zylinder, sondern durch Modifizierung der dem Raster-Image-Prozessor zugeführten Originalbilddaten, ohne deren maschinenunabhängiges Format zu ändern. Datensätze in einem Format wie z.B. PostScript umfassen einzelne Parameter, die z.B. den Koordinatenursprung, die Winkelposition des gesamten Bildes und die Abmessungen des gesamten Bildes angeben. Daher müssen nur einige wenige Zahlenwerte aufgrund der Registerfehlersingale modifiziert werden. Außerdem kann die Schaltung, die diese Modifizierung durchführt, ohne Rücksicht auf irgenwelche maschinenspezifische Eigenschafen aufgebaut sein, so daß sie prinzipiell bei jeder der erwähnten Arten von digitalen Druckmaschinen verwendet werden kann.

Vorteilhafte Ausgestaltungen der Erfindung sind in den Unteransprüchen angegeben.

Die Möglichkeit, die dem Raster-Image-Prozessor zugeführten Originalbilddaten zu verändern, läß sich nicht nur für die erfindungsgemäße Korrektur von Registerfehlern ausnutzen. Sie bietet außerdem die Möglichkeit eines direkten Eingriffs eines Maschinenbedieners. Selbst wenn eine Druckmaschine aufgrund ihrer Konstruktionsgenauigkeit bzw. mit Hilfe von Korrektureinrichtungen theoretisch ideale Druckerzeugnisse liefern sollte, wird dies im praktischen Betrieb aufgrund von nicht vorhersehbaren Einflüssen und Unzulänglichkeiten häufig nicht erreicht. Daher ist es wünschenswert, daß der Maschinenbediener die Möglichkeit zur Modifizierungen hat, wenn er diese auf Grund seines Beurteilungsvermögens für notwendig erachtet. Dazu können Stellmittel vorgesehen werden, mit denen der Maschinenbediener gezielt einzelne Parameter in den Originalbilddaten verändern kann. Diese Parameter können nicht nur die Parameter für die erwähnten Register sein. Vielmehr gibt es weitere Parameter in den Originalbilddaten, für die es sinnvoll ist , eine unmittelbare Manipulationsmöglichkeit seitens des Maschinenbedieners vorzusehen. Beispielsweise kann vorgesehen werden, daß der Bediener die Farbgebung der einzelnen Farbauszüge individuell beeinflussen kann, wenn es ihn notwendig erscheint, wobei die Manipulation auch zonenweise erfolgen kann. Es sind dann weder herkömmliche mechanische Verstellmittel noch technisch aufwendige Einrichtungen zur Manipulation von Bit-Map-Daten erforderlich.

Ausführungsbeispiele der Erfindung sind in der Zeichnung dargestellt und werden im folgenden näher beschrieben. Es zeigen
- Fig. 1: eine Prinzipskizze einer digitalen Druckmaschine mit automatischer Registerregelung,
- Fig. 2a bis 2d: eine Übersicht über die verschiedenen Registerfehler,
und

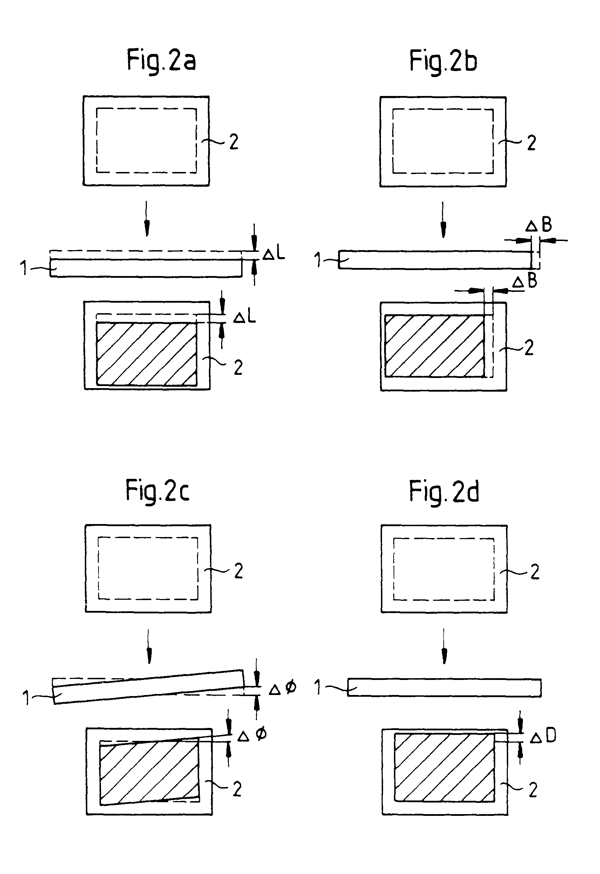

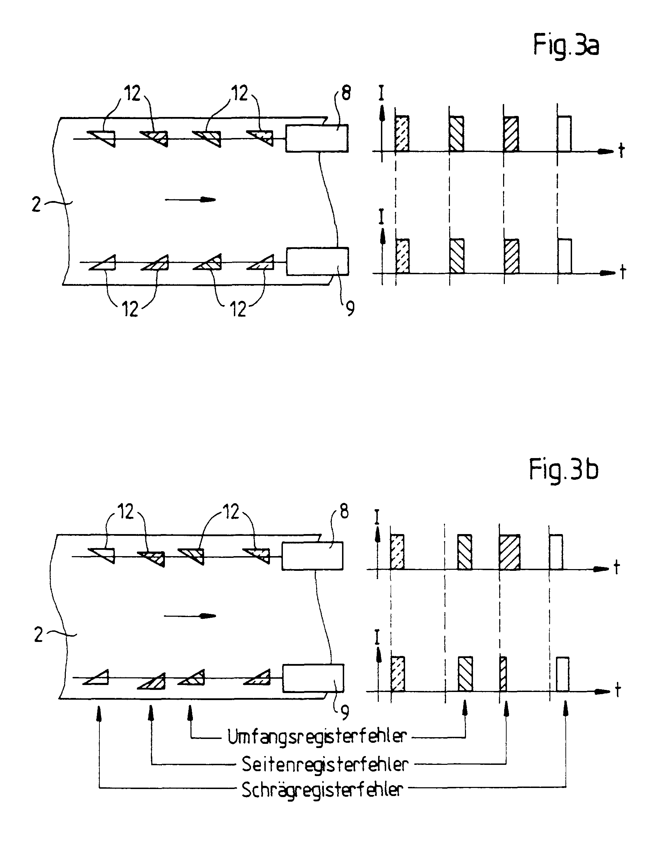

- Fig. 2a und 3b: ein Beispiel für die Messung der Registerfehler.

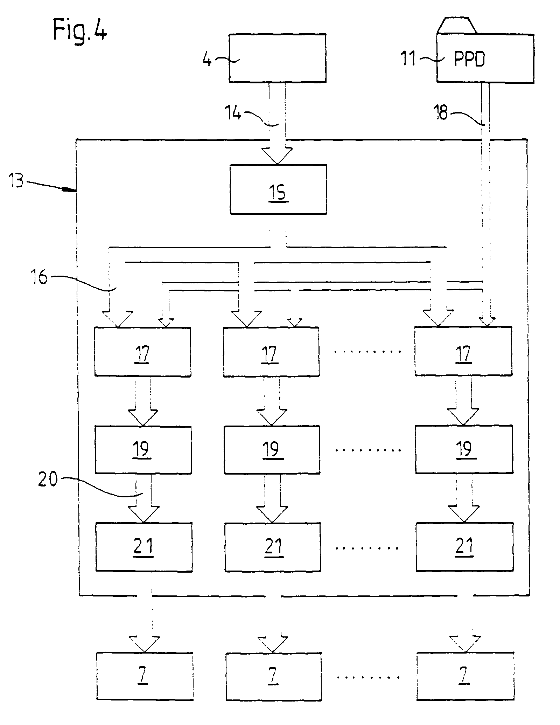

- Fig. 4: ein Schaubild zur Erläuterung der Arbeitsweise eine Raster-Image-Prozessors in einem weiteren Ausführungsbeipiel.

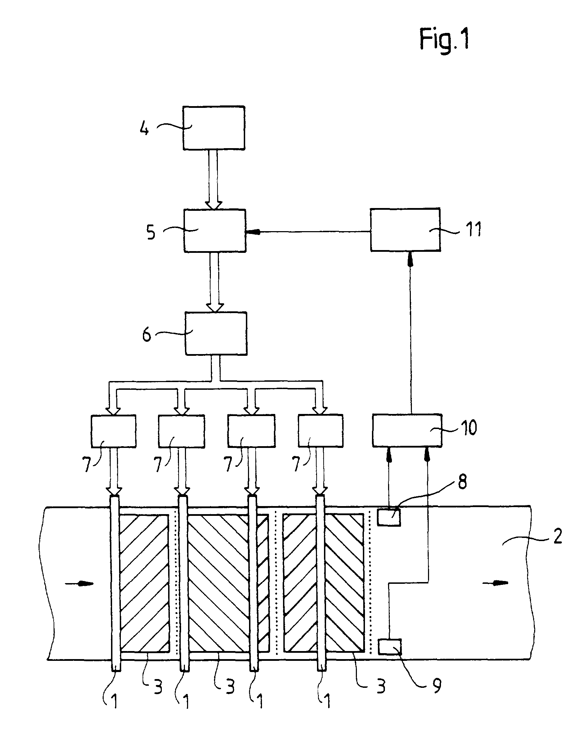

Fig. 1 zeigt vier in einer Reihe angeordnete digitale Druckwerke 1, an denen sich ein Bedruckstoff 2 in Pfeilrichtung vorbeibewegt. Die Druckwerke 1 erstrecken sich jeweils quer über den Bedruckstoff 2 und drucken nacheinander farbige Teilbilder auf dem Bedruckstoff 2 übereinander, z.B. mit den Farben Cyan, Magenta, Gelb und Schwarz, wie durch unterschiedlich schraffierte Felder 3 angedeutet.

Der Bedruckstoff 2 kann eine zusammenhängende Papierbahn sein, wie bei Rollendruckmaschinen, oder aus Einzelbögen bestehen, die hintereinander entlang der Druckwerke 1 befördert werden, z.B. auf einem Transportband.

Als Druckwerke 1 kommen alle Arten von Druckeinrichtungen in Betracht, die durch elektrische Signale pixelweise ansteuerbar sind, um auf den Bedruckstoff 2 sichtbare Druckbilder zu erzeugen. In Betracht kommen z.B. Titentstrahl-Arrays oder Druckwerke mit einem Schreibkopf, der auf einem Zylinder latente Ladungsbilder erzeugt, die an einem Farbwerk entsprechend der Ladungsverteilung eine Druckfarbe aufnehmen, die dann auf den Bedruckstoff 2 übertragen wird.

Eine Eingangsschaltung 4 bildet eine Datenschnittstelle zu einenm vorgeschalteten Rechner zur Druckvorlagengestaltung (Desktop-Publishing-Bereich), der die Bilddaten eines Druckauftrages in einer maschinenunabhängigen Seitenbeschreibungssprache liefert. Die hier beschriebenen Ausführungsbeispiele verwenden die Seitenbeschreibungssprache PostScript (ADOBE-Systems Incorp.: PostSript Language Referenz Manuell, 2. Ausgabe, Addison-Wesley-Publishing Co. 1994), es kann aber auch irgendeine andere geeignete Seitenbeschreibungssprache verwendet werden. Die Eingangsschaltung 4 führt die PostScript-Daten über eine Wilk-Daten-Modifizierungsschaltung 5, die weiter unten näher erläutert wird, einem Raster-Image-Prozessor 6 zu, der fester Bestandteil der digitalen Druckmaschine ist und der die Aufgabe hat die Bilddaten zunächst in die Prozeßfarben zu separieren und dann maschinenangepaßt zu rastern. Die Arbeitsweise des Raster-Image-Prozessors 6 hängt im Detail von der verwendeten Seitenbeschreibungssprache ab und ergibt sich daraus. Der Raster-Image-Prozessor 6 bereitet die Post-Script-Daten für den jeweiligen Druckprozeß auf, indem er für jede zu druckende Farbe einen maschinenspezifischen digitalen Farbauszug erstellt, d.h. ein Pixelmuster, das die auf dem Bedruckstoff 2 zu erzeugende Farbintensität und -verteilung darstellt. Die digitalen Farbauszüge werden in zugehörigen Seitenpuffern 7 abgelegt und nach Abschluß der Verarbeitung im Raster-Image-Prozessor 6 an die Druckwerke 1 übertragen, die entsprechende sichtbare Druckbilder auf den Bedruckstoff 2 aufbringen.

Auf jeder Seite des Bedruckstoffes 2 (in der Transportrichtung gesehen) ist jeweils ein optischer Sensor 8 bzw. 9 angeordnet, der auf eine kleine Stelle auf der Oberfläche des Bedruckstoffes 2 gerichtet ist und der den Bedruckstoff 2 somit linienförmig abtastet, wenn sich der Bedruckstoff 2 in der Transportrichtung bewegt. Die Sensoren 8, 9 erzeugen Signale, die der Farbintensität an den Abtaststellen proportional sind, und führen sie einer Auswerteschaltung 10 zu. Die Auswerteschaltung 10 erzeugt auf der Basis der Signale aus den Sensoren 8, 9 Registerfehlersignale, die erforderlichenfalls in einem Speicher 11 gespeichert und dann der Bilddatenmodifizierungsschaltung 5 zugeführt werden.

Bevor die Erfassung der Registerfehler und deren Korrektur näher beschrieben wird, werden anhand von Fig. 2a bis 2d die verschiedenen in Betracht kommenden Registerfehler erläutert. Diese zeigen jeweils einen Bogen bzw. einen Abschnitt des Bedruckstoffes 2 vor und nach dem Passieren eines der Druckwerke 1.

Fig. 2a zeigt, daß bei einem Umfangsregisterfehler der resultierende Farbauszug um einen Betrag L in der Bewegungsrichtung des Bedruckstoffes verschoben ist. Fig. 2b zeigt, daß ein Seitenregisterfehler eine entsprechende Verschiebung um B senkrecht zur Bewegungsrichtung bewirkt. Wie in Fig. 2c gezeigt, führt ein Schrägregisterfehler zu einer Neigung des Farbauszuges um einen Winkel in Bewegungsrichtung. Wie in Fig. 2d gezeigt, kommt es bei einer Bilddehnung bzw. -stauchung zu einer Längenänderung um einen Betrag D.

Unter stationären Betriebsbedingungen sind diese Registerfehler konstant. Daher können Sie mit Hilfe der Sensoren 8 und 9 , die eine Fehlerermittlungseinrichtung bilden, bestimmt und anschließend mit Hilfe der Bilddatenmodifizierungsschaltung 5 korrigiert werden. Dieses wird nachstehend unter Bezugnahme auf Fig. 3a und 3b beispielhaft beschrieben.

Die Bestimmung der Registerfehler kann im Rahmen eines Kalibrierlaufes erfolgen, der vom Maschinenbediener bedarfsweise gestartet wird. Während eines solchen Kalibriervorgangs druckt jedes Druckwerk seitliche Paßmarken 12 auf den Bedruckstoff 2. In diesem Ausführungsbeispiel sind die Paßmarken 12 zwei seitliche Reihen von rechtwinkligen Dreiecken, deren eine Kathete parallell und deren andere Kathete senkrecht zur Bewegungsrichtung des Bedruckstoffes 2 verläuft. Dies ist auf den linken Seiten von Fig. 3a und 3b dargestellt, Die einzelnen Paßmarken 12 werden z.B. jeweils von demjenigen Druckwerk 1 in Fig. 1 erzeugt, das an der entsprechenden Stelle in der Reihe von Druckwerken 1 liegt, wie durch entsprechende Schraffierungen der Paßmarken 12 angedeutet.

Wenn die Paßmarken 12 unter den Sensoren 8, 9 hindurchlaufen, erzeugt jeder Sensor 8, 9 eine Folge von Rechteckimpulsen, wie auf den rechten Seiten von Fig. 3a und 3b dargestellt, wobei die Zugehörigkeit der Impuse zu den entsprechenden Paßmarken 12 bzw. Druckwerken 1 wiederum durch entsprechende Schraffierungen dargestellt ist.

Im fehlerfreien Fall, wie in Fig. 3a dargestellt, sind die beiden Impulsfolgen phasengleich und weisen äquidistant verteilte Rechteckimpulse gleicher Breite auf, wie in den Diagrammen auf der rechten Seite von Fig. 3a zu sehen ist, die die normalisierten Signalintensitäten I der Sensoren 8 bzw. 9 gegen die Zeit t zeigen.

Fig. 3b zeigt einen Fall, in dem Registerfehler auftreten. Dasjenige Druckwerk 1, das die den Sensoren 8, 9 am nächsten liegenden Paßmarken 12 erzeugt hat, sei ein Bezugs-Druckwerk, von dem in diesem Beispiel angenommen wird, daß es korrekt liegende Paßmarken 12 auf dem Bedruckstoff 2 erzeugt. Aufgrund von verschiedenen Registerfehlern sind die nachfolgenden Paßmarken 12 auf dem Bedruckstoff 2 gegenüber den in Fig. 3a gezeigten Idealpositionen verschoben, und die resultierenden Signale der Sensoren 8, 9 weichen wie folgt von der Idealform ab, vgl. die entsprechenden Impulsdiagramme auf der rechten Seite von Fig. 3b:
- Im Falle eines Umfangsregisterfehlers werden die ansteigenden Flanken der beiden zugehörigen Impulse um den gleichen Betrag verschoben.
- Ein Seitenregisterfehler äußert sich in unterschiedlichen Impulsbreiten.
- Bei einem Schrägregisterfehler sind die ansteigenden Flanken der entsprechenden Impulse gegeneinander verschoben.
- Einge Bogendehnung führt schließlich zu einer gleichmäßigen Vergrößerung der Abstände zwischen den Impulsen eines einzelnen Druckwerkes (in Fig. 3b nicht dargestellt).

Auf diese Weise wird ein eindeutiger Zusammenhang zwischen Fehlerursache und Symtom geliefert. Damit ist sichergestellt, daß auch eine Überlagerung sämtlicher Fehlertypen innerhalb eines Druckwerkes erkannt und korrekt ausgewertet werden kann.

Auf der Basis dieses Zusammenhangs erzeugt die Auswerteschaltung 10 (Fig. 1) Registerfehlersignale.

Die Auswerteschaltung 10 bestimmt in einem ersten Teil, um welchen Betrag und in welcher Richtung die ansteigenden Flanken jeweils zweier zusammengehöriger Impulse der Sensoren 8, 9 auf der Zeichenachse verschoben sind, d. h. die Verschiebung gegenüber den rechts in Fig. 3a gezeigten Idealpositionen relativ zu dem Bezugs-Druckwerk 1, daß die den Sensoren 8, 9 am nächsten liegenden Paßmarken 12 erzeugt hat. Dabei genügt es, daß zeitliche Mittel der beiden ansteigenden Flanken mit der Idealposition zu vergleichen. Dies wird aufeinanderfolgend für jeden Farbauszug durchgeführt und die so gewonnenen Größen stellen die Umfangsregisterfehler für die jeweiligen Farbauszüge relativ zum Bezugsdruckwerk 1 dar.

In einem zweiten Teil bildet die Auswerteschaltung 10 die Differenz der Impulsbreiten jeweils zweier zusammengehöriger Impulse der Sensoren 8, 9. Diese Differenzen geben die Seitenregisterfehler der jeweiligen Farbauszüge an.

In einem dritten Teil bestimmt die Auswerteschaltung 10 die Zeitdifferenz zwischen den ansteigenden Flanken jeweils zweier zusammengehöriger Impulse der Sensoren 8, 9. Diese Zeitdifferenz stellt den Schrägregisterfehler des jeweiligen Farbauszuges dar.

In einem vierten Teil bestimmt die Auswerteschaltung 10 die Zeitdifferenz zwischen den ansteigenden Flanken zweier zusammengehöriger Impulse der Sensoren 8,9 bzw. deren Mittelwert mit den als viertes darauf folgenden Impulsen bzw. deren Mittelwert, d.h. mit den ansteigenden Flanken der Impulse, welche die Paßmarken liefern, die das gleiche Druckwerk 1 als nächstes auf den Bedruckstoff 2 gedruckt hat (die den Paßmarken 12 folgenden Paßmarken sind in Fig. 3b nicht mehr sichtbar; sie folgen den dargestellten Paßmarken 12 in einer Entfernung entsprechend der Druckbildlänge). Es genügt, diese Zeitdifferenz über das Bezugsdruckwerk 1 zu bestimmen, daß die Paßmarken 12 erzeugt hat, die den Sensoren 8, 9 in Fig. 3a, 3b am nächsten liegen. Falls diese Zeitdifferenz größer als die Zeitdifferenz zwischen zwei Maschinentakten ist, liegt eine Bogendrehung vor, deren Größe durch den Betrag der Abweichung vom Maschinentakt gegeben ist.

Die in der Auswerteschaltung 10 bestimmten Größen der Umfangsregister, Seitenregisterfehler, Schrägregisterfehler und Bogendehnung bilden die Registerfehlersignale für die einzelnen Farbauszüge und sind im Idealfall Null. Die Registerfehlersignale sind maschinenspezifische Parameter, die ebenso wie eine Reihe anderer Größen (Farben, Rasterweite, Papierformat etc.) für die Datenaufbereitung im Raster-Image-Prozessor 6 bzw. für die Layoutgestaltung von Bedeutung sind. Um derzeit abrufbar zu sein, können diese Daten als PostScript-Druckerbeschreibungsdatei in einem Speicher 11 gespeichert werden.

Die Registerfehlersignale werden der Bilddatenmodifizierungschaltung 5 zugeführt, in der der Originaldatensatz, der als PostScript-Datei vorliegt, auf folgende Weise modifiziert wird, bevor er dem Raster-Image-Prozessor 6 zugeführt wird:
- Eine Kompensation von Umfangs- und Seitenregisterfehlern erfolgt durch entsprechende Manipulation des PostScript-Parameters für den Koordinatenursprung, auf den sich die räumliche Anordnung sämtlicher Bildbestandteile bezieht.
- Schrägregisterfehler können durch eine Neigung des gesamten Bildinhaltes ausgeglichen werden, was in PostScript durch Veränderung eines weiteren Parameters möglich ist.
- Dehnungsfehler lassen sich durch eine Stauchung des Bildinhaltes korrigieren. Dies ist in PostScript ebenfalls durch Anspassung eines einzelnen Parameters möglich.

Somit müssen nur vier Zahlenwerte gezielt verändert werden, um die mechanischen Unzulänglichkeiten eines einzelnen Druckwerkes zu kompensieren. Zu beachten ist allerding, daß diese Korrekturmaßnahme individuell für jeden der vier Farbauszüge durchgeführt werden muß. Dies stellt allerdings kein Problem dar, da der Raster-Image-Prozessor 6 die einzelnen Farbauszüge nacheinander generiert. Dadurch besteht die Möglichkeit, vor jedem Durchlauf des Raster-Image-Prozessors 6 die entsprechenden Parameter an die jeweilige Farbe anzupassen

Die beschriebene Form und Anrodnung der Paßmarken erlaubt eine äußerst einfache Erfassung und Bestimmung der Registerfehler. Darüber hinaus sind noch zahlreiche weitere geeignete Formen und Anordnungen von Paßmarken denkbar. Im Falle, daß der Bedruckstoff im Anschluß an den Druck beschnitten wird, kann man ferner den Rand des Bedruckstoffes mit geeigneten Paßmarken versehen, so daß die Registerregelung kontinuierlich während des gesamten Maschinenlaufs durchführt werden kann. Außerdem ist es denkbar, unsichtbare Paßmarken zu verwenden, die von geeigneten Sensoren abgetatet werden. Unter Umständen können auch die Druckbilder selbst oder Elemente davon als Paßmarken verwendet werden.

Wie bereits erwähnt, ist die beschriebene Registerfehlerkorrektur auch im Rahmen der Computer-to-Press-Technologie anwendbar. Um die Bildbereiche auf den Druckformen nicht durch Paßmarken zu verletzen, können die Plattenbelichtungseinheiten z.B. Paßmarken auf den Druckformen erzeugen, die außerhalb der späteren Bildbereiche angeordnet sind.

In dem oberen beschriebene Ausführungsbeispiel werden die Bilddaten modifiziert, bevor sie dem Raster-Image-Prozessor zugeführt werden. Alternativ können die Bilddaten im Rahmen der Verarbeitung im Raster-Image-Prozessor modifiziert werden. Ein Beispiel für eine Registerregelung über den Raster-Image-Prozessor selbst zeigt Fig. 4, in der mit Elementen aus Fig. 1 übereinstimmende Elemente mit gleichen Bezugszeichen versehen sind.

Anhand von Fig. 4 werden die einzelnen Verarbeitungsschritte innerhalb eines Durchlaufs eines Raster-Image-Prozessors 13 für das Beispiel eines in der Seitenbeschreibungssprache PostScript vorliegenden Druckauftrages beschrieben.

In Fig. 4 liefert ein Spooler oder eine andere geeignete Eingangsschaltung hier eine PostSricpt-Datei 14 die ein M-farbiges Druckbild beschreibt. Die PostScript-Datei 14 wird einer Farbtrennstufe 15 des Raster-Image-Prozessors zugeführt. In der Farbtrennstufe 15 wird die PostScript-Datei 14 in N neue PostScript-Dateien 16 separiert, von denen jede einen einzelnen Farbauszug spezifiziert.

Auf der Basis dieser vorseparierten Daten, die immer noch in einem maschinenunabhängigen bzw. geräteunabhängigen Format vorliegen, erfolgt dann die Korrektur der Registerfehler durch barspezifische Verschiebung, Dehnung bzw. Stauchung des gesamten Bildinhaltes. Dies geschieht in N-Registerkorrekturstufen 17, von denen jede eine der PostSript-Dateien 16 empfängt. Außerdem empfangen die Registerkorrekturstufen 17 Steuerparameter 18 zur Korrektur der Registerfehler jedes Farbauszuges. Die Steuerparameter 18 können entweder zur Korrektur durch direkten Eingriff des Maschinenbedieners eingegeben werden oder sie werden als maschinenspezifische sogenannte BDT-Dateien (PostScript-Printer description files) für Registerfehlerdaten einem Speicher 11 entnommen, in dem sie z.B. von einer Auswerteschaltung 10 wie in Fig. 1 abgelegt worden sind. In den Registerkorrekturstufen 17 werden die Steuerparameter 18 an entsprechender Stelle in die zugehörigen PostScript-Dateien 16 eingetragen.

Die derart manipulierten PostScript-Dateien die die N-Farbauszüge beschreiben werden dann N Rasterwandlern 19 zugeführt, in denen sie in N gerasterte Halbtonbilder 20 umgewandelt werden. Die einzelnen gerasterten Halbtonbilder 20 werden - soweit erforderlich - in maschinenspezifischen, sogenannten Scrinning-Stufen 21 an die Gegebenheiten der Druckmaschine angepaßt werden, ehe sie an Seitenpuffern 7 und aus den Seitenpuffern 7 den Druckwerken 1 (Fig. 1) zugeführt werden.

### Bezugszeichenliste

- 1: Druckwerk
- 2: Bedruckstoff
- 3: Feld
- 4: Eingangsschaltung
- 5: Bilddatenmodifizierungsschaltung
- 6: Raster-Image-Prozessor
- 7: Seitenpuffer
- 8: Sensor
- 9: Sensor
- 10: Auswerteschaltung
- 11: Speicher
- 12: Paßmarke
- 13: Raster-Image-Prozessor
- 14: PostScript-Datei
- 15: Farbtrennstufe
- 16: PostScript-Datei
- 17: Registerkorrekturstufe
- 18: Steuerparameter
- 19: Rasterwandler
- 20: Halbtonbild

## Patentansprüche

1. Druckmaschine mit mehreren digitalen Bebilderungseinheiten, einem Raster-Image-Prozessor, der Bilddaten in einem maschinenunabhängigen Datenformat empfängt, aus den maschinenunabhängigen Bilddaten maschinenspezifische Bilddaten erzeugt und die maschinenspezifischen Bilddaten den einzelnen Bebilderungseinheiten zuführt, und einer Fehlerermittlungseinrichtung, welche Registerfehler der Bebilderungseinheiten ermittelt und entsprechende Registerfehlersignale erzeugt, und mit einer Bilddatenmodifizierungsschaltung (5), die dem Raster-Image-Prozessor (6) vorgeschaltet und mit der Fehlerermittlungseinrichtung (8, 9, 10) verbunden ist und die die Bilddaten in dem maschinenunabhängigen Format auf der Basis der Registerfehlersignale modifiziert und die modifizierten maschinenunabhängigen Bilddaten dem Raster-Image-Prozessor (6) zuführt.

2. Druckmaschine nach Anspruch 1,
**dadurch gekennzeichnet,**
**daß** die Bilddatenmodifizierungschaltung (5) die Bilddaten als Seitenbeschreibungssprache-Daten empfängt, einzelne Parameter in den Seitenbeschreibungssprache-Daten modifiziert und die so modifizierten Seitenbeschreibungssprache-Daten an den Raster-Image-Prozessor (6) ausgibt.

3. Druckmaschine nach Anspruch 1 oder 2,
**dadurch gekennzeichnet,**
**daß** die Fehlerermittlungseinrichtung wenigstens zwei Sensoren (8, 9), die im Abstand zueinander über einem zu bebildernden Substrat (2) angeordnet sind, und eine Auswerteschaltung (10) umfaßt, die mit den Sensoren und mit der Bilddatenmodifizierungsschaltung (5) verbunden ist.

4. Druckmaschine nach Anspruch 3,
**dadurch gekennzeichnet,**
**daß** die Auswerteschaltung (10) und die Bilddatenmodifizierungsschaltung (5) über einen Datenspeicher (11) für die Registerfehlersignale miteinander verbunden sind.

5. Druckmaschine nach Anspruch 3 oder 4,
**dadurch gekennzeichnet,**
**daß** die Sensoren (8, 9)optische Sensoren sind, die auf von den Bebilderungseinheiten (1) auf einem Substrat (2) erzeugte Paßmarken (12) ansprechen.

6. Druckmaschine nach Anspruch 5,
**dadurch gekennzeichnet,**
**daß** die Paßmarken (12) rechtwinklige Dreiecke sind, die im Abstand zueinander auf dem Substrat (2) angeordnet sind, wobei jeweils eine Kathete der Druckecke parallel zu einer Substratseite verläuft.

7. Druckmaschine mit mehreren digitalen Bebilderungseinheiten (1) und einem Raster-Image-Prozessor (13) der eine Farbtrennstufe (15) zum Separieren von eingegebenen maschinenunabhängigen Bilddaten (14) in maschinenunabhängige Bilddaten (16) für einzelne Farben, mehrere Registerkorrekturstufen (17), die von der Farbtrennstufe (15) jeweils maschinenunabhängige Bilddaten (16) für eine einzelne Farbe empfangen und mehrere, den Registerkorrekturstufen (17) nachgeschaltete Rasterwandler (19) zur Umwandlung der maschinenunabhängigen Bilddaten (16) für einzelne Farben in maschinenspezifische Bilddaten (20) wie die einzelnen Bebilderungseinheiten (1) aufweist, wobei die Registerkorrekturstufen (17) mit einer außerhalb des Raster-Image-Prozessors (13) angeordneten Eingabeeinrichtung (11) für Registerfehlersignale (18) verbunden sind.

8. Druckmaschine nach Anspruch 7,
**dadurch gekennzeichnet,**
**daß** die Eingabeeinrichtung (11) ein Datenspeicher ist, der mit einer Fehlerermittlungseinrichtung (8, 9, 10) der Registerfehler verbunden ist.

9. Druckmaschine nach Anspruch 8,
**dadurch gekennzeichnet,**
**daß** die Fehlerermittlungseinrichtung wenigstens zwei Sensoren (8, 9), die im Abstand zueinander über einen zu bebildernden Substrat (2) angeordnet sind und eine Auswerteschaltung (10) umfaßt, die mit der Eingabe Einrichtung (11) der Registerfedersignale verbunden ist.

10. Druckmaschine nach Anspruch 9,
**dadurch gekennzeichnet,**
**daß** die Sensoren (8, 9) optische Sensoren sind, die auf von den Bebilderungseinheiten (1) auf einem Substrat (2) erzeugte Paßmarken ansprechen.

11. Druckmaschine nach Anspruch 10,
**dadurch gekennzeichnet,**
**daß** die Paßmarken (12) rechtwinklige Dreiecke sind, die im Abstand zueinander auf dem Substrat (2) angeordnet sind, wobei jeweils eine Kathete der Dreiecke parallel zu einer Substratseite verläuft.

12. Druckmaschine nach einem der Ansprüche 7 bis 11,
**dadurch gekennzeichnet,**
**daß** die maschinenunabhängigen Bilddaten Seitenbeschreibungssprache-Daten (14, 16) sind.

13. Verfahren zur Korrektur von Registerfehlern bei einer Druckmaschine mit mehreren digitalen Bebilderungseinheiten (1) und einem Raster-Image-Prozessor (6, 13), der Bilddaten in einem maschinenunabhängigen Datenformat empfängt, aus dem maschinenunabhängigen Bildaten maschinenspezifische Bilddaten erzeugt und die maschinenspezifischen Bilddaten den einzelnen Bebilderungseinheiten zuführt, wobei Registerfehler durch Manipulation der maschinenunabhängigen Bilddaten korrigiert werden.

14. Verfahren nach Anspruch 13,
**dadurch gekennzeichnet,**
**daß** die Registerfehler mit Hilfe von Sensoren (8, 9) über einen zu bebildernden Substrat (3) erfaßt werden, um Registerfehlersignale zu erzeugen, die zur Manipulation der maschinenunabhängigen Bilddaten verwendet werden.

15. Verfahren nach Anspruch 13,
**dadurch gekennzeichnet,**
**daß** die maschinenunabhängigen Bilddaten durch den Maschinenbediener manipulierbar sind.

## Claims

1. Printing machine comprising several digital imaging units, a raster image processor receiving image data in a machine-independent data format, generating machine-specific data from the machine-independent image data and supplying the machine-specific image data to the individual imaging units, an error detection device detecting register errors of the imaging units and generating corresponding register error signals, and an image data modification circuit (5) connected upstream of the raster image processor (6), communicating with the error detection device (8, 9, 10), modifying the image data in the machine-independent format on the basis of the register error signals and supplying the modified machine-independent image data to the raster image processor (6).

2. Printing machine according to claim 1,
**characterized in**
**that** the image data modification circuit (5) receives the image data as page description language data, modifies individual parameters in the page description language data and outputs the thus modified page description language data to the raster image processor (6).

3. Printing machine according to claim 1 or 2,
**characterized in**
**that** the error detection device comprises at least two sensors (8, 9) spaced apart from each other and arranged above a substrate (2) to be imaged, and an evaluation circuit (10) connected to the sensors and the image data modification circuit.

4. Printing machine according to claim 3,
**characterized in**
**that** the evaluation circuit (10) and the image data modification circuit (5) are connected to each other via a data memory (11) for the register error signals.

5. Printing machine according to claim 3 or 4,
**characterized in**
**that** the sensors (8, 9) are optical sensors responding to register marks (12) created on a substrate (2) by the imaging units.

6. Printing machine according to claim 5,
**characterized in**
**that** the register marks (12) are right triangles arranged at a distance from each other on the substrate (2), with one cathetus of each triangle extending parallel to a side of the substrate.

7. Printing machine comprising several digital imaging units (1) and a raster image processor (13), the raster image processor having a colour separation stage (15) for separating input machine-independent image data (14) into machine-independent image data (16) for individual colours, several register correction stages (17) receiving respective machine-independent image data (16) for an individual colour from the colour separation stage (15), and several raster converters connected downstream of the register correction stages (17) for converting the machine-independent image data (16) for individual colours into machine-specific image data (20) for the individual imaging units (1), the register correction stages (17) being connected to an input device (11) for register error signals (18) arranged outside the raster image processor (13).

8. Printing machine according to claim 7,
**characterized in**
**that** the input device (11) is a data memory connected to an error detection device (8, 9, 10) of the register errors.

9. Printing machine according to claim 8,
**characterized in**
**that** the error detection device comprises at least two sensors (8, 9) spaced apart from each other and arranged above a substrate (2) to be imaged, and an evaluation circuit (10) connected to the input device (11) of the register error signals.

10. Printing machine according to claim 9,
**characterized in**
**that** the sensors (8, 9) are optical sensors responding to register marks created on a substrate (2) by the imaging units (1).

11. Printing machine according to claim 10,
**characterized in**
**that** the register marks (12) are right triangles arranged at a distance from each other on the substrate (2), with one cathetus of each triangle extending parallel to a side of the substrate.

12. Printing machine according to one of claims 7 to 11,
**characterized in**
**that** the machine-independent image data are page description language data (14, 16).

13. Method for correcting register errors in a printing machine having several digital imaging units (1) and a raster image processor (6, 13), the raster image processor (6, 13) receiving image data in a machine-independent data format, generating machine-specific data from the machine-independent image data and supplying the machine-specific image data to the individual imaging units, wherein register errors are corrected by manipulating the machine-independent image data.

14. Method according to claim 13,
**characterized in**
**that** the register errors are detected by means of sensors (8, 9) above a substrate (3) to be imaged, in order to create register error signals used for manipulating the machine-independent data.

15. Method according to claim 13,
**characterized in**
**that** the machine-independent data are manipulatable by the machine operator.

## Revendications

1. Machine à imprimer comprenant plusieurs unités de production d'image numériques, un générateur d'image tramée qui reçoit des données d'image dans un format de données indépendant de la machine, produit, à partir des données d'image indépendantes de la machine, des données d'image spécifiques de la machine, et transmet les données d'image spécifiques de la machine aux diverses unités de production d'image, un dispositif de détection d'erreurs qui détecte les erreurs de repérage des unités de production d'image et produit des signaux d'erreur de repérage correspondants, et un circuit de modification des données d'image (5) qui est placé en amont du générateur d'image tramée (6), est relié au dispositif de détection d'erreurs (8, 9, 10), modifie les données d'image dans le format indépendant de la machine sur la base des signaux d'erreurs de repérage et transmet les données d'image indépendantes de la machine modifiées au générateur d'image tramée (6).

2. Machine à imprimer selon la revendication 1,
**caractérisée**
**en ce que** le circuit de modification des données d'image (5) reçoit les données d'image sous la forme de données en langage de description de page, modifie certains paramètres dans les données en langage de description de page et transmet les données en langage de description de page ainsi modifiées au générateur d'image tramée (6)

3. Machine à imprimer selon la revendication 1 ou 2,
**caractérisée**
**en ce que** le dispositif de détection d'erreurs comprend deux capteurs (8, 9) qui sont disposés à écartement l'un de l'autre au-dessus d'un substrat (2) sur lequel il s'agit de produire des images, ainsi qu'un circuit d'analyse (10) qui est relié aux capteurs et au circuit de modification des données d'image (5).

4. Machine à imprimer selon la revendication 3,
**caractérisée**
**en ce que** le circuit d'analyse (10) et le circuit de modification des données d'image (5) sont reliés l'un à l'autre par l'intermédiaire d'une mémoire de données (11) prévue pour les signaux d'erreurs de repérage.

5. Machine à imprimer selon la revendication 3 ou 4,
**caractérisée**
**en ce que** les capteurs (8, 9) sont des capteurs optiques qui répondent à des repères (12) produits sur un substrat (2) par les unités de production d'image (1).

6. Machine à imprimer selon la revendication 5,
**caractérisée**
**en ce que** les repères (12) sont des triangles rectangles qui sont disposés à écartement l'un de l'autre sur le substrat (2), un côté de l'angle droit du triangle s'étendant parallèlement à un côté du substrat.

7. Machine à imprimer comprenant plusieurs unités de production d'image numériques (1) et un générateur d'image tramée (13) qui présente un étage de sélection chromatique (15) destiné à diviser des données d'image (14) indépendantes de la machine entrées en données d'image (16) indépendantes de la machine pour les différentes couleurs, plusieurs étages de correction du repérage (17) dont chacun reçoit en provenance de l'étage de sélection chromatique (15) des données d'image indépendantes de la machine (16) pour une des différentes couleurs, et plusieurs convertisseurs de trame (19) connectés en aval des étages de correction de repérage (17), destinés à convertir les données d'image (16) indépendantes de la machine pour les différentes couleurs en données d'image (1) spécifiques de la machine, ainsi que les différentes unités de production d'image (1), les étages de correction du repérage (17) étant reliés à un dispositif d'entrée (11) pour les signaux d'erreurs de repérage (18) qui est disposé à l'extérieur du générateur d'image tramée (13).

8. Machine à imprimer selon le revendication 7,
**caractérisée**
**en ce que** le dispositif d'entrée (11) est une mémoire de données qui est reliée à un dispositif de détection d'erreurs (8, 9, 10) pour les erreurs de repérage.

9. Machine à imprimer selon la revendication 8,
**caractérisée**
**en ce que** le dispositif de détection d'erreurs comprend au moins deux capteurs (8, 9) qui sont disposés à un certain écartement l'un de l'autre au-dessus d'un substrat (2) sur lequel il s'agit de produire des images, et un circuit d'analyse (10) qui est relié au dispositif d'entrée (11) des signaux d'erreurs de repérage.

10. Machine à imprimer selon la revendication 9
**caractérisée**
**en ce que** les capteurs (8, 9) sont des capteurs optiques qui répondent à des repères (12) produits sur un substrat (2) par les unités de production d'image (1).

11. Machine à imprimer selon la revendication 10
**caractérisée**
**en ce que** les repères (12) sont des triangles rectangles qui sont disposés à écartement l'un de l'autre sur le substrat (2), un côté de l'angle droit du triangle s'étendant parallèlement à un côté du substrat.

12. Machine à imprimer selon une des revendications 7 à 11,
**caractérisée**
**en ce que** les données d'image indépendantes de la machine sont des données (14, 16) en langage de description de page.

13. Procédé pour la correction d'erreurs de repérage dans une machine à imprimer comprenant plusieurs unités de production d'image numériques (1), un générateur d'image tramée (6, 13) qui reçoit des données d'image dans un format de données indépendant de la machine, produit, à partir des données d'image indépendantes de la machine, des données d'image spécifiques de la machine, et transmet les données d'image spécifiques de la machine aux diverses unités de production d'image, les erreurs de repérage étant corrigées par une manipulation des données d'image indépendantes de la machine.

14. Procédé selon la revendication 13,
**caractérisé**
**en ce que** les erreurs de repérage sont captées à l'aide de capteurs (8, 9) sur un substrat (3) sur lequel il s'agit de produire des images pour produire des signaux d'erreur de repérage qui sont utilisées pour la manipulation des données d'image indépendantes de la machine.

15. Procédé selon la revendication 13,
**caractérisé**
**en ce que** les données d'image indépendantes de la machine peuvent être manipulées par l'utilisateur de la machine.
